# EUROPEAN PATENT SPECIFICATION

(11) **EP 1 462 691 B1**
(45) Date of publication and mention of the grant of the patent: **14.06.2006**
(21) Application number: 04101226.1
(22) Date of filing: 25.03.2004
(51) Int. Cl.: F16K 1/30

(54) **Tap for gas or liquid cylinder**
Ventil für einen Gas- oder Flüssigkeitzylinder
Robinet pour cylindre à gaz ou liquide

(30) Priority: 28.03.2003 EP 31008121; 18.03.2004 US 803271
(43) Date of publication of application: 29.09.2004
(73) Proprietor: LUXEMBOURG PATENT COMPANY S.A., 7440 Lintgen (LU)
(72) Inventor: Kremer, Paul, 7263, Walferdange (LU); Schmit, Jacques, 9365, Eppeldorf (LU)
(74) Representative: Weydert, Robert

(56) References cited:
- FR-A- 2 659 412
- GB-A- 191 007 163
- US-A- 1 136 606
- US-A- 2 678 799
- US-A- 5 894 859

## Description

### Field of the invention

The present invention relates to a tap for a gas or liquid gas cylinder, particularly of a vehicle, such as a trailer, and more particularly concerns such a tap preventing uncontrolled spillage of the cylinder contents in case the tap body is sheared-off externally of the cylinder leaving a portion of a tap root end within a cylinder aperture.

### State of the Art

When a tap is attached to a gas or fluid cylinder its root end portion is at least partly threadably engaged in a tap aperture of the gas or liquid cylinder. One portion of the tap body is thus received within the cylinder tap aperture whereas another body portion of the tap extends from the cylinder tap aperture to the exterior of the cylinder. In case of an accident lateral or axial external forces may be applied to the portion of the tap body extending from the cylinder tap aperture, which forces may be of sufficient magnitude to cause shearing-off of the tap body approximately at the location where it extends out from the cylinder tap aperture. If the tap is sheared-off the main portion of the tap body provided with a primary valve means for opening or closing a fluid flow passage through the tap is separated from a portion of the tap body that remains engaged within the cylinder tap aperture. Thus, in case of loss of the primary valve means the contents of the cylinder may flow out, which is dangerous particularly if the cylinder contains toxic, inflammable or explosive gases or fluids. In the prior art it has been proposed to provide the tap upstream of the primary valve (i.e. between the primary valve means and the cylinder interior) with an auxiliary check valve means that is urged into closed position by a biasing spring and also by the pressure of the fluid contained in the cylinder. In the prior art this known check valve means is arranged either externally of the cylinder or close to the primary valve means so that it risks to be sheared-off together with the tap body portion containing the primary valve means, or at least to be damaged by the external forces to such an extent that it is no longer capable to tightly close the cylinder aperture.

In US-A-1,136,606 there is disclosed a tap as defined in the precharacterizing portion of independent claim 1. In this known tap the check valve seat is formed at the lower end of a tap body externally threaded portion and radially within an external thread of a check valve retention sleeve threadably engaged on the tap body external thread, and the retention sleeve external thread is adapted to be engaged in a threaded opening of a locomotive boiler. Accordingly, there is a direct radial force transmitting path between the sleeve external thread (or the threaded boiler opening) and the check valve seat and in case a large external impact force is applied to the tap body, the check valve seat may be deformed and tight closure of the check valve may be impaired. Further, the known tap does not permit connection of a plunger tube thereto to reach a deeper location of the gas or liquid cylinder.

Check valves are also known which are spring biased to open position and closed only by the pressure in the cylinder in case of failure of the primary valve actuating mechanism.

### Summary of the Invention

The object of the present invention is to provide an improved tap for a gas or liquid cylinder preventing flow-out of the fluid contained in the cylinder in case of shearing-off of the tap body portion extending out from the cylinder tap aperture or in case of deformation of the tap body resulting in failure of the primary valve means and which permits attachment of a plunger tube reaching deeper in the gas or liquid cylinder.

To achieve this there is provided in accordance with the invention a tap for a gas or liquid cylinder, comprising a tap body having a root end portion, said root end portion having a free end and an exteriorly threaded section adapted to be engaged in a threaded opening of a gas or liquid cylinder; an elongated stem means mounted in said tap body, said stem means having a longitudinal axis; an inverted seat primary valve means provided in said tap body at a side of the root end portion opposite said free end; and a secondary check valve means having a movable check valve element spring biased to a closed position wherein it is in engagement with a check valve seat on the root end portion; said check valve element being disposed in a retention member threadably fixed to the root end portion of the tap body, wherein said stem means is axially movable in a first direction towards said secondary check valve means to open said primary valve means and to open said secondary check valve means against the biasing spring force to permit fluid flow through said tap body from an inlet to an outlet thereof, and in a second opposite direction to permit said secondary check valve means to be closed by said biasing spring and to close said primary valve means to shut-off fluid flow from said inlet to said outlet of said tap body, characterized in that said root end portion has a reduced diameter section extending between the exteriorly threaded section and the free end of the root end portion, said reduced diameter section having a smaller external diameter than the exteriorly threaded section and the check valve seat being formed on said reduced diameter section, and that the retention member of the check valve element is an open-ended sleeve tube having a smaller external diameter than the exteriorly threaded section and having one end thereof fixed to the reduced diameter portion and being threaded at a free opposite open end thereof to permit connection of a plunger tube to said sleeve tube.

Accordingly, the secondary check valve is spaced from the threaded section of the root end portion on the side of the root end portion opposite to the tap main body portion containing the primary valve means. When the tap is engaged in the tap aperture of the cylinder the secondary check valve means is therefore deeply positioned within the cylinder so that it remains in place after shearing-off of the tap body externally of the cylinder and is protected against deformation by external forces acting on the tap main body portion so that it remains fully operative after deformation of the tap body and there is no direct radial force transmission path between the check valve seat and the tap mounting thread. Further, the sleeve tube can be extended by a plunger tube adapted to be fixed to the sleeve tube.

In one advantageous embodiment the check valve seat is formed at the free end of the reduced diameter section and the check valve element comprises a piston element located in the sleeve tube at the free end of the reduced diameter section and guided for axial movement in the sleeve tube and preferably the check valve biasing spring is not located in the fluid flow path through the check valve means but is in a spring chamber that is bypassed by the fluid flow path through the check valve. This reduces turbulence in the gas flow through the check valve, and reduces spring stress and vibrations.

### Short description of the drawings

The invention will now be described in greater detail with respect to the accompanying drawings in which:
Figure 1 shows in longitudinal section a tap having a primary valve and a check valve, but which is not comprised within the scope of claim 1; and
Figure 2 shows an embodiment of a tap of the invention in longitudinal section.

### Detailed description of the preferred embodiments

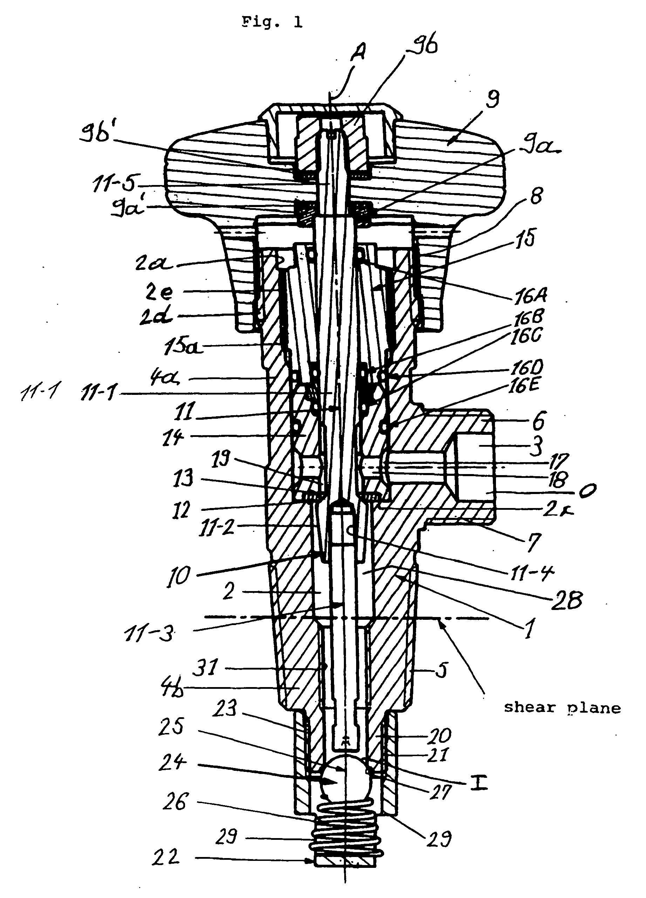

Referring first to figure 1 in which the tap is shown in upright position, it can be seen that the tap comprises a tap body 1, a reversed seat primary valve means 10, a secondary check valve means 24, a stem means 11 to actuate both valve means 10 and 24 and a stem actuating means comprising a hand-operated handle 9.

The tap body 1 has a longitudinal axis A that extends vertically in figure 1. The tap body 1 has an upper main body portion 4a and a lower root end portion 4b. The root end portion 4b has a conical threaded section 5 that tapers downwardly to a reduced diameter. The root end portion 4b has a cylindrical reduced diameter section 20 extending downwardly from the lower or reduced diameter end of the conical threaded section 5 and the main body portion 4a extends upwardly from the opposite, upper end or large diameter end of the conical threaded section 5. The outer diameter of reduced diameter section 20 is smaller than the small diameter of the conical section 5. For certain applications the threaded section 5 may be cylindrical. A longitudinal bore 2 concentric to the longitudinal axis A extends completely through the tap body 1 from the upper to the lower end thereof. The longitudinal bore 2 has a counterbore 2a extending from the upper end of the tap body 1 downwardly and terminating at an axially and upwardly facing shoulder 2c within the main body portion 4a. The main body portion 4a further has at its upper end an outer threaded portion 2d as well as an inner threaded portion 2e in the counterbore 2a proximate to the upper open end thereof. The main body portion 4a further has a laterally extending connection portion 6 that has an outer thread 7 thereon.

Disposed within the main body portion 4a between the upper and lower ends thereof is the inversed seat primary valve means 10 which comprises a annular sealing ring means 13 retained on the axially facing shoulder 2c of the counterbore 2a by an annular sealing ring retainer 14. The primary valve means 10 further has a conical upwardly facing annular seat surface 12 on the stem means 11, as will be further described later herein. The sealing ring means retainer 14 is locked in position by a locking ring 15 that has an external thread 15a thereon that is engaged within the internal thread 2e of the counterbore 2a.

At the lower end of the tap the secondary check valve means 24 is mounted to the root end portion 4b. The check valve means 24 comprises a ball element 25 and a conical helically wound spring 26 urging the ball element 25 upwardly in fluid tight engagement with an annular seat surface 27 provided on the lower end of the reduced diameter section 20. The check valve means 24 is under the reduced diameter section 20 in a cup-shaped member 22 that has at its upper end an internal thread 23 engaging an external thread 21 of the reduced diameter section 20. The cup-shaped member 22 has apertures 29 at its lower end portion for fluid flow into and out of the cup-shaped member 22.

The stem means 11 comprises a first or upper portion 11-1 extending through the annular sealing ring 13, the sealing ring retainer 14 and the locking ring 15 and out of the tap body 1 at the upper end thereof. At its lower end the upper portion 11-1 of the stem means 11 has a radially thickened lower end portion 11-2 disposed below the annular sealing ring 13 and having at its upper end the conical upwardly facing annular seat surface 12. The stem means 11 further has a second or lower extension portion 11-3 received at its upper end in an axially extending, downwardly opening bore 11-4 of the thickened lower end portion 11-2 of the upper stem portion 11a and fixedly secured therein. The lower stem portion 11-3 extends downwardly from said thickened portion 11-2 into the root end section 4b and has its lower end spaced slightly upwardly from the check valve ball 24 when the inversed seat primary valve means 10 is closed, namely when the seat surface 12 on the stem means 11 is in fluid tight engagement with the annular sealing ring 13. The reversed seat primary valve means 10 is opened when the stem means 11 is moved downwardly to move the annular seat surface 12 downwardly away from the annular sealing ring 13. Shortly after opening of the primary valve means 10 the lower end of the lower stem portion 11-3 contacts the check valve ball element 25 to move it away from the seat 27. When the stem means 11 is moved in the opposite direction, namely upwardly, the check valve means 24 is allowed to close first by the biasing force of the spring 26 and the pressure of the fluid contained in the cylinder and thereafter the primary valve means 10 is also closed.

The stem means 11 is actuated upwardly and downwardly along the longitudinal axis A by means of the handle 9. The handle 9 has an internally threaded portion 8 engaging the external thread 2d at the upper end of the valve body 1. The handle 9 is mounted on an upper reduced diameter end portion 11-5 of the upper stem portion 11-1 for free rotation about the stem means 11. The handle 9 is mounted to the stem means 11 to move the stem means 11 axially in both directions with the handle 9 when the handle 9 is rotated about axis A and moves upwardly and downwardly with respect to the tap body 1 due to the engagement of the internal handle thread 8 with the external thread 2d at the upper end of the tap body 1. The handle 9 is axially retained on the stem means 11 between a lower support ring 9a engaging an upwardly facing shoulder at the upper end of the stem upper portion 11-1 and a nut member 9b threaded onto the upper reduced diameter end portion 11-5 of the upper stem portion 11-1. Friction-reducing washers 9a', 9b' are provided between the support ring 9a and the handle 9 and between the nut 9b and the handle 9, respectively.

Two seal rings 16A and 16B are provided between the upper stem portion 11-1 and the locking ring 15. A seal ring 16C is provided between the upper stem portion 11-1 and the annular sealing ring retainer 14. A further sealing ring 16D is provided between the locking ring 15 and the inner wall of the counterbore 2a and an additional sealing ring 16E is provided between the outer circumferential surface of the retainer 14 and the inner circumferential surface of the counterbore 2a.

A fluid flow passage 28 is formed in the longitudinal bore 2 and extends from a tap body inlet I at the lower end of the reduced diameter section 20 of the root end portion 4b around the lower portion 11-3 of the stem means 11 and around the thickened lower portion 11-2 of the upper stem portion 11-1 up to the annular sealing ring 13. A further flow passage 3 is formed in the laterally extending connection portion 6, and extends from a tap body outlet O into the counterbore 2a above the annular sealing ring 13 and is in communication through circumferentially spaced orifices 18 formed in the sealing ring retainer 14 with an annular flow passage 19 formed within the retainer 14 by a reduced diameter portion formed in the upper stem portion 11-1 above the radially thickened end portion 11-2 thereof.

When the primary valve means 10 is open both flow passages 28 and 3, 19 are in fluid flow communication with one another and when the check valve means 24 is also open gas a liquid flow is allowed through the tap from inlet I to outlet O in a fluid discharge mode or in the opposite direction in a cylinder filling mode. The flow passages 28 and 3, 19 are sealed-off from one another when the primary valve means 10 is closed. The check valve means 24 is then also closed and gas or liquid flow through the tap is shut-off

It can accordingly be seen that the check valve means 24 is located at the lowermost extreme end of the root end portion 4b below the reduced diameter section 20 and in case the tap body 1 is sheared-off at the shear plane shown in figure 1 the check valve means 24 remains fully operative on the lowermost portion of the root end portion 4b that remains within the threaded tap aperture of the cylinder. The secondary check valve means 24 is spaced at a substantial distance downwardly from the shear plane and is located in the cylinder so that it will not be damaged or otherwise deformed when the tap body 1 is sheared-off along the shear plane. The secondary check valve 24 also remains fully operative if the tap body portion is not sheared-off by external forces exerted to the tap body externally of the cylinder but only deformed by such forces. Moreover, the smaller diameter section 20 on which the secondary check valve means 24 is mounted is not in direct contact with the cylinder and is therefore unlikely to be deformed when the threaded section 5 is deformed by large pulling-out forces that may be applied thereto when the tap body main portion 4a is sheared-off or laterally deformed. As the reduced diameter section 20 is not deformed the secondary check valve means 24 remains fully effective to tightly close the cylinder aperture.

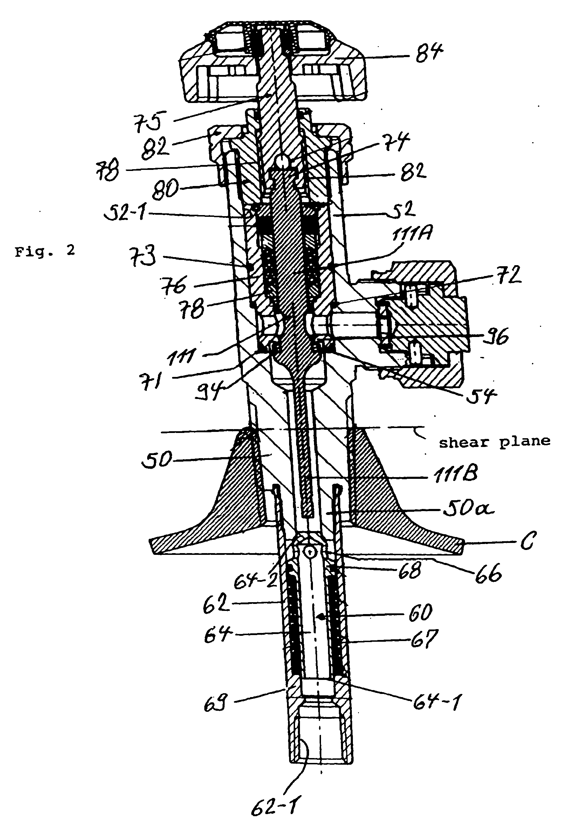

Referring now to figure 2, there is shown a tap according to the invention also in upright position. The tap of figure 2 will be described only as far as it is distinguished from the tap of the figure 1 embodiment. First, in figure 2 the neck end of the cylinder C is shown in which the tap body root end portion 50 is engaged.

A modified secondary check valve 60 is mounted in an open-ended sleeve tube 62 fixedly secured to the lower reduced diameter section 50a of the root end portion 50. The check valve 60 comprises a movable check valve element disposed under the reduced diameter section 50a and consisting of a piston element 64 having a piston skirt whose external diameter is smaller than the inner diameter of the sleeve tube 62. The piston skirt or piston element 64 has a lower open end 64-1 and a closed upper end 64-2 urged against a seat surface provided at the lower end of the reduced diameter section 50a. The piston element 64 is urged towards the seat surface by a helical cylindrical spring 67 disposed in an annular spring chamber surrounding the piston element 64 between in inwardly extending annular shoulder 69 of the sleeve tube 62 and an outwardly extending annular flange 68 of the piston element 64. The piston element 64 is guided for axial movement in the sleeve tube 62 in the inwardly extending annular shoulder 69 of the sleeve tube 62 and by the annular piston flange 68. It is noted that the spring chamber does not form a part of the fluid flow path through the check valve 60, in other words, the fluid flow path through the check valve 60 bypasses the spring chamber. The piston element 64 has between the closed upper end 64-2 and the annular flange 68 at least one and preferably a plurality of orifices 66 placing the interior of the piston element 64 in communication with the exterior thereof below the closed upper end 64-2. The sleeve tube 62 has at its lower end an internal thread 62-1 for connecting a plunger tube (not shown) thereto, and is also internally threaded at its upper end for threaded engagement with an external thread of the reduced diameter section 50a.

In another embodiment the spring 67 could be in the piston skirt and the piston skirt could have axial fluid flow channels in its outer surface.

The figure 2 embodiment is further distinguished from the figure 1 embodiment in that the stem means 111 has the upper stem portion 111A integrally formed in one piece with the lower stem portion 111B. Further, the annular sealing means 94 of the inverted seat primary valve means 54 is provided on the stem means 111 and the annular seat surface 96 of the primary valve means 54 is provided on a fixed tubular seat member 76 that surrounds the stem means 111 and is comparable to the sealing ring means retainer 14 of the figure 1 embodiment.

To prevent fluid leakage along the upper portion 111A of the stem means 111 a seal structure 78 is provided within the annular seat member 76. The seal structure 78 is known in the art and will not be further described herein. Further sealing means 71, 72, 73 are provided to prevent leakage around the annular seat member 76 and along the inner circumferential surface of the counterbore 52-1 in the main body portion 52.

Another stem actuating means is also provided which comprises a handle 84 having an axial post 75 fixedly secured thereto. The post 75 is axially aligned with the stem means 111 and coupled thereto by coupling means 74 to permit rotational movement of the post 75 relative to the axially movable stem means 111. The annular or tubular seat member 76 is retained in position by an annular locking ring 80 threaded into the upper end of the counterbore 52-1 and in turn retained by a tap bonnet 82 threadably engaged with the outer surface of the main body portion 52. The post 75 has an outer threaded portion engaged with a threaded portion 82 on the internal surface of the annular locking ring 80. When handle 84 is rotated in opposite directions it moves upwardly and downwardly and transmits this motion to the stem means 111 to move it axially.

In other respects the embodiment of figure 2 is identical to the embodiment of figure 1, except that the root end portion 50 does not have an internal thread for receiving an actuating device to open the secondary check valve 60 when the tap body has been sheared-off in the shear plane shown in figure 2.

Although two different embodiments of the invention have been described in detail hereinbefore it is to be understood that numerous modifications or variations can be made thereto within the scope and spirit of the invention. For example, another stem actuating means can be used, such as a hydraulic, pneumatic or electric actuating means. Also the reduced diameter section 20 of figure 1 or 50a of figure 2 could be made longer and the check valve arranged within the reduced diameter section. The check valve seat surface 27 (figure 1) would then be intermediate the opposite ends of section 20 or 50a and not at the free end thereof.

## Claims

1. A tap for a gas or liquid cylinder, comprising:
a tap body (52) having a root end portion (50), said root end portion (50) having a free end and an exteriorly threaded section adapted to be engaged in a threaded opening of a gas or liquid cylinder;
an elongated stem means (111) mounted in said tap body (52), said stem means (111) having a longitudinal axis;
an inverted seat primary valve means (54) provided in said tap body (52) at a side of the root end portion (50) opposite said free end; and
a secondary check valve means (60) having a movable check valve element spring biased to a closed position wherein it is in engagement with a check valve seat on the root end portion (50); said check valve element being disposed in a retention member threadably fixed to the root end portion (50) of the tap body (52),
wherein said stem means (111) is axially movable in a first direction towards said secondary check valve means (60) to open said primary valve means (54) and to open said secondary check valve means (60) against the biasing spring force to permit fluid flow through said tap body (52) from an inlet to an outlet thereof, and in a second opposite direction to permit said secondary check valve means (60) to be closed by said biasing spring and to close said primary valve means (54) to shut-off fluid flow from said inlet to said outlet of said tap body (52),
**characterized in that** said root end portion (50) has a reduced diameter section (50a) extending between the exteriorly threaded section and the free end of the root end portion (50), said reduced diameter section. (50a) having a smaller external diameter than the exteriorly threaded section and the check valve seat being formed on said reduced diameter section (50a), and that the retention member of the check valve element is an open-ended sleeve tube (62) having a smaller external diameter than the exteriorly threaded section and having one end thereof fixed to the reduced diameter section (50a) and being threaded at a free opposite open end thereof to permit connection of a plunger tube to said sleeve tube (62).

2. Tap according to claim 1, **characterized in that** the check valve seat is formed at the free end of the reduced diameter section (50a).

3. Tap according to claim 1, **characterized in that** the check valve element comprises a piston element (64).

4. Tap according to claim 3, **characterized in that** the check valve means comprises a biasing sparing (67) disposed in a spring chamber and the fluid flow path through the check valve means bypasses said spring chamber.

5. Tap according to claim 3, **characterized in that** said piston element (64) comprises a piston skirt, the outer diameter of which being smaller than the inner diameter of the sleeve tube (62), said piston skirt being guided for axial movement in the sleeve tube (62) in an inner annular shoulder(69) of the sleeve tube (62) and by an outer annular flange (68) of said piston skirt, that a check valve biasing spring (67) is disposed about said piston skirt between said shoulder (69) and said flange (68) , and that said piston skirt has a hollow interior having a first closed end (64-2) for engagement with the check valve seat, a second open end (64-1) in communication with the sleeve tube interior, and at least one orifice (66) through the piston skirt between the closed end (64-2) and the flange (68) of the piston skirt.

6. Tap according to claim 1, **characterized in that** the sleeve tube thread for the connection of a plunger tube thereto is an internal thread (62-1).

7. Tap according to anyone of claims 1 to 6, **characterized in that** in the closed position of the primary valve means (54) a check valve actuating end of the stem means (111) is spaced from the check valve element so that when the stem means (111) is moved in said one direction the primary valve means (54) is opened first and when the stem means (111) is moved in the second direction the check valve means (60) is allowed to close first.

## Patentansprüche

1. Ventil für eine Gas- oder Flüssigkeitsflasche, mit:
einem Ventilkörper (52), der einen Ansatzendteil (50) hat, wobei der Ansatzendteil (50) ein freies Ende und einen Aussengewinde aufweisenden Abschnitt besitzt, der in eine Gewindeöffnung einer Gas- oder Flüssigkeitsflasche einzuschrauben ist;
einer langgestreckten Schafteinrichtung (111), die in dem Ventilkörper (52) getragen ist und eine Längsachse aufweist;
einer einen umgekehrten Sitz aufweisenden Hauptventileinrichtung (54), die in dem Ventilkörper (52) auf einer dem freien Ende gegenüberliegenden Seite des Ansatzendteiles (50) vorgesehen ist; und
einer sekundären Rückschlagventileinrichtung (60) mit einem beweglichen Rückschlagventilelement, das durch Federwirkung in eine geschlossene Stellung vorgespannt ist, in welcher es an einem Rückschlagventilsitz am Ansatzendteil (50) anliegt; wobei das Rückschlagventilelement in einem Halteteil angeordnet ist, der am Ansatzendteil (50) des Ventilkörpers (52) festgeschraubt ist,
wobei die Schafteinrichtung (111) in einer ersten Richtung axial beweglich ist in Richtung zu der sekundären Rückschlagventileinrichtung (60) zum Öffnen der Hauptventileinrichtung (54) und zum Öffnen der sekundären Rückschlagventileinrichtung (60) gegen die Vorspannfederkraft zum Zulassen einer Fluidströmung durch den Ventilkörper (52) von einem Einlass zu einem Auslass desselben, und in einer zweiten entgegengesetzten Richtung beweglich ist, damit die sekundäre Rückschlagventileinrichtung (60) durch die Vorspannfeder zu schliessen ist und zum Schliessen der Hauptventileinrichtung (54), um die Fluidströmung vom Einlass zu dem Auslass des Ventilkörpers (52) zu unterbrechen,
**dadurch gekennzeichnet, dass** der Ansatzendteil (50) einen Abschnitt (50a) mit verringertem Durchmesser aufweist, der sich zwischen dem Aussengewinde aufweisenden Abschnitt und dem freien Ende des Ansatzendteiles (50) erstreckt, wobei der Abschnitt (50a) mit verringertem Durchmesser einen kleineren Aussendurchmesser aufweist als der Aussengewinde aufweisende Abschnitt und der Rückschlagventilsitz an dem Abschnitt (50a) mit verringertem Durchmesser vorgesehen ist, und dass der Halteteil des Rückschlagventilelementes eine offenendige Rohrhülse (62) ist mit einem kleineren Aussendurchmesser als der Aussengewinde aufweisende Abschnitt, wobei die Hülse mit einem Ende an dem Abschnitt (50a) mit verringertem Durchmesser befestigt ist und an einem gegenüberliegenden, freien Ende ein Gewinde aufweist zum Anschluss eines Plungerrohres an die Rohrhülse (62).

2. Ventil nach Anspruch 1, **dadurch gekennzeichnet, dass** der Rückschlagventilsitz an dem freien Ende des Abschnittes (50a) mit verringertem Durchmesser vorgesehen ist.

3. Ventil nach Anspruch 1, **dadurch gekennzeichnet, dass** das Rückschlagventilelement ein Kolbenelement (64) ist.

4. Ventil nach Anspruch 3, **dadurch gekennzeichnet, dass** die Rückschlagventileinrichtung eine Vorspannfeder (67) aufweist, die in einer Federkammer angeordnet ist und der Fluidströmungsweg durch die Rückschlagventileinrichtung um die Federkammer herumführt.

5. Ventil nach Anspruch 3, **dadurch gekennzeichnet, dass** das Kolbenelement (64) einen Kolbenmantel aufweist dessen laussendurchmesser kleiner ist als der Innendurchmesser der Rohrhülse (62), wobei der Kolbenmantel in der Rohrhülse (62) in einer inneren Ringschulter (69) der Rohrhülse (62) und durch einen äusseren Ringflansch (68) des Kolbenmantels zur Axialbewegung geführt ist, dass eine Rückschlagventilvorspannfeder (67) um den Kolbenmantel angeordnet ist zwischen der Schulter (69) und dem Flansch (68), und dass der Kolbenmantel einen hohlen Innenraum aufweist mit einem ersten, geschlossenen Ende (64-2) zur Anlage an dem Rückschlagventilsitz, einem zweiten, offenen Ende (64-1) in Verbindung mit dem Innern der Rohrhülse, und mindestens einem Durchlass (66) durch den Kolbenmantel zwischen dem geschlossenen Ende (64-2) und dem Flansch (68) des Kolbenmantels.

6. Ventil nach Anspruch 1, **dadurch gekennzeichnet, dass** das Gewinde der Rohrhülse zum Anschluss eines Plungerrohres an die Rohrhülse ein Innengewinde (62-1) ist.

7. Ventil nach einem der Ansprüche 1 bis 6, **dadurch gekennzeichnet, dass** in einer geschlossenen Stellung der Hauptventileinrichtung (54) ein Rückschlagventilbetätigungsende der Schafteinrichtung (111) von dem Rückschlagventilelement beabstandet ist damit, wenn die Schafteinrichtung (111) in der einen Richtung bewegt wird, die Hauptventileinrichtung (54) zuerst geöffnet wird und wenn die Schafteinrichtung (111) in der zweiten Richtung bewegt wird, der Rückschlagventileinrichtung (60) erlaubt wird zuerst zuschliessen.

## Revendications

1. Robinet pour une bouteille de gaz ou de liquide, comprenant :
un corps de robinet (52) ayant une partie de queue (50), cette partie de queue (50) ayant une extrémité libre et une section à filetage externe adaptée en vue d'être engagée dans une ouverture filetée d'une bouteille de gaz ou de liquide ;
un moyen de tige allongée (111) monté dans le corps de robinet (52), ce moyen de tige (111) ayant un axe longitudinal ;
un moyen de vanne primaire (54) à siège inversé prévu dans le corps de robinet (52) sur un côté de la partie de queue (50) opposé à l'extrémité libre ; et
un moyen de vanne de retenue secondaire (60) ayant un élément de vanne de retenue mobile sollicité par un ressort vers une position fermée dans lequel il est en contact avec un siège de la vanne de retenue prévu sur la partie de queue (50) ; cet élément de vanne de retenue étant disposé dans un élément de support fixé par un engagement vissé à la partie de queue (50) du corps de robinet (52),
le moyen de tige (111) étant axialement mobile dans une première direction vers le moyen de vanne de retenue secondaire (60) en vue d'ouvrir le moyen de vanne primaire (54) et pour ouvrir le moyen de vanne de retenue secondaire (60) contre l'effort du ressort pour permettre un courant de fluide par le corps de robinet (52) d'une entrée vers une sortie de celui-ci, et dans une seconde direction opposée pour permettre au moyen de vanne de retenue secondaire (60) d'être fermé par ledit ressort et pour fermer le moyen de vanne primaire (54) en vue de couper le courant de fluide de l'entrée vers la sortie du corps de robinet (52),
**caractérisé en ce que** ladite partie du queue (50) a une section à diamètre réduit (50a) s'étendant entre la section à filetage externe et l'extrémité libre de la partie de queue (50), cette section à diamètre réduit (50a) ayant un diamètre externe inférieur à la section à filetage externe et le siège de la vanne de retenue étant formé sur la section à diamètre réduit (50a), et **en ce que** l'élément de support de l'élément de vanne de retenue est un tube (62) à extrémités ouvertes ayant un diamètre externe inférieur à la section filetée et ayant l'une de ces extrémités fixée à la section à diamètre réduit (50a) et étant filetée à une extrémité libre opposée en vue de permettre le raccordement d'un tube plongeur audit tube (62).

2. Robinet selon la revendication 1, **caractérisé en ce que** le siège de la vanne de retenue est formé à l'extrémité libre de la section à diamètre réduit (50a).

3. Robinet selon la revendication 1, **caractérisé en ce que** l'élément de vanne de retenue comporte un élément formant piston (64).

4. Robinet selon la revendication 3, **caractérisé en ce que** le moyen de vanne de retenue comporte un ressort (67) disposé dans une chambre de ressort et le trajet d'écoulement de fluide par le moyen de vanne de retenue contourne la chambre de ressort.

5. Robinet selon la revendication 3, **caractérisé en ce que** ledit élément formant piston (64) comporte une jupe de piston dont le diamètre externe est inférieur au diamètre interne du tube (62), cette jupe de piston étant guidée pour mouvement axial dans le tube (62) à l'intérieur d'une épaule interne annulaire (69) du tube (62) et par un collier annulaire externe (68) de la jupe de piston, **en ce qu'**un ressort de commande (67) de l'élément de vanne de retenue est disposé autour de la jupe de piston entre l'épaule (69) et le collier (68), et **en ce que** la jupe de piston a un intérieur creux ayant une première extrémité fermée (64-2) pour contacter le siège de la vanne de retenue, une seconde extrémité ouverte (64-1) en communication avec l'intérieur du tube, et au moins un orifice (64) formé à travers la tige de piston entre l'extrémité fermée (64-2) et le collier (68) de la jupe de piston.

6. Robinet selon la revendication 1, **caractérisé en ce que** le filetage du tube pour le raccordement d'un tube plongeur à ce tube est un filetage interne (62-1).

7. Robinet selon l'une quelconque des revendications 1 à 6, **caractérisé en ce que** dans la position fermée du moyen de vanne primaire (64) une extrémité du moyen de tige (111) pour actionner l'élément de la vanne de retenue est écartée de l'élément de vanne de retenue de sorte que par mouvement du moyen de tige (111) dans ladite première direction, le moyen de vanne primaire (54) est ouvert d'abord et en cas de mouvement du moyen de tige (111) dans la seconde direction, le moyen de vanne de retenue (60) est permis de fermer d'abord.
